# EUROPEAN PATENT APPLICATION

(11) **EP 4 814 894 A1**
(43) Date of publication of application: **30.09.2026**
(21) Application number: 25167138.4
(22) Date of filing: 28.03.2025
(51) Int. Cl.: G06V 10/82, G06V 20/56

(54) **A COMPUTER IMPLEMENTED METHOD FOR TRAINING A MACHINE LEARNING MODEL**

(71) Applicant: Zenseact AB, 417 56 Gothenburg (SE)
(72) Inventor: VERBEKE, Willem, 412 59 Göteborg (SE); PETERSSON, Christoffer, 426 55 Västra Frölunda (SE); TONDERSKI, Adam, 417 51 Göteborg (SE)
(74) Representative: Zacco Sweden AB

(57) **Abstract**

The disclosed technology at least partly relates to a computer-implemented method (100) for training an automated driving (AD) machine learning model (306) to perform an AD related task. The AD machine learning model (306) comprises an encoder module (306a) configured to generate an encoded representation (310) of an input to the AD machine learning model (306), and an output module (306b) configured to generate a model output (326) based on the encoded representation (310). The method (100) comprises: obtaining (S102) first training data (302) comprising a plurality of training samples (302a-c); obtaining (S104) a set of large-scale machine learning models; processing (S106), for each training sample through the set of large-scale machine learning models; obtaining (S108) a transformation function (314) between encoded representations (310) of the AD machine learning model (306) and encoded representations of the large-scale machine learning models of the set of large-scale machine learning models; training (S110) the encoder module (306a) of the AD machine learning model (306), using the first training data; and fine-tuning (S112) the AD machine learning model (306) to perform the AD related task, using second training data (320) annotated for said AD related task.

## Description

### TECHNICAL FIELD

The present inventive concept relates to the field of machine learning. In particular, it is related to methods and devices for training an automated driving machine learning model for use in or in development of automated driving systems.

### BACKGROUND

With the development of technology in recent years, image capturing and processing techniques have become widely used in different fields of technology. In particular, vehicles produced today are commonly equipped with some form of vision or perception system to build an understanding of the environment, and further systems that use this understanding for enabling new functionalities as part of an automated driving system (ADS).

To handle the complexity of real-world driving scenarios, which involves varying road conditions, unpredictability in human or non-human behavior, and rapidly changing environments, the use of machine learning models has proven to enhance performance and capability of the ADS. Machine learning models, such as deep learning models or neural networks are especially useful as part of the perception system of the ADS and for performing downstream tasks, such as detecting, identifying, or tracking objects in the surrounding environment of the vehicle, or for predicting vehicle-trajectories. To solve the tasks necessary to achieve automated (or semiautomated) driving with deep learning, algorithms typically require a vast quantity of annotated training data, with high diversity and quality. Such datasets need to cover any scenario that might present itself while driving, for the algorithm to be able to learn the necessary knowledge. However, obtaining such a training set is associated with high costs, especially in terms of annotating the data. There is therefore a need for new and improved ways of training machine learning models to be used in the automated (or semiautomated) driving context

### SUMMARY

The disclosed technology seeks to mitigate, alleviate, or eliminate one or more of the above-identified deficiencies and disadvantages in the prior art to address various problems relating to development of automated driving systems. More specifically, it presents a new and improved way of training automated driving (AD) machine learning models, by leveraging the knowledge available in large-scale models (such as web-scale models) from other fields that the AD context. Such models are pre-trained on vast amounts of training data, which often requires huge computational resources. They are typically publicly accessible, e.g. through open-source licenses, thus making them readily available. The disclosed technology leverages these models in training an AD machine learning model, either for use as a production model in a vehicle, or as a foundation model, e.g. for performing some intermediate task such as generating auto-annotations of training data.

Various aspects and embodiments of the disclosed invention are defined below and in the accompanying independent and dependent claims.

According to a first aspect, there is provided a computer-implemented method for training an automated driving (AD) machine learning model to perform an AD related task. The AD machine learning model may be use in, or in development of, automated driving systems. The AD machine learning model comprises an encoder module configured to generate an encoded representation of an input to the AD machine learning model, and an output module configured to generate a model output based on the encoded representation. The method comprises obtaining first training data comprising a plurality of training samples. Each training sample comprising a first sensor data sequence of a first sensor data type and a second sensor data sequence of a second sensor data type. Each of the first and second sensor data sequence comprise a set of sensor data frames pertaining to a surrounding environment of a vehicle. The method further comprises obtaining a set of large-scale machine learning models, each trained on a task different from the AD related task. The set of large-scale machine learning models comprising at least a first large-scale machine learning model. The method further comprises processing, for each training sample of the plurality of training samples, at least a subset of the sensor data frames of the first sensor data sequence through the first large-scale machine learning model, to generate a set of encoded representations for the processed sensor data frames of the first sensor data sequence. The method further comprises obtaining a transformation function between encoded representations of the AD machine learning model and encoded representations of the large-scale machine learning models of the set of large-scale machine learning models. The method further comprises training the encoder module of the AD machine learning model, using the first training data, to generate an encoded representation of each training sample, given the first and second sensor data sequence of said training sample as input, that matches the set of encoded representations, as transformed by application of the transformation function, generated by the first large-scale machine learning model for said sensor data sequence. The method further comprises fine-tuning the AD machine learning model to perform the AD related task, using second training data annotated for said AD related task. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for training an AD machine learning model to perform an AD related task. The AD machine learning model comprises an encoder module configured to generate an encoded representation of an input to the AD machine learning model, and an output module configured to generate a model output based on the encoded representation. The computing device comprising control circuitry. The control circuitry is configured to obtain first training data comprising a plurality of training samples. Each training sample comprising a first sensor data sequence of a first sensor data type and a second sensor data sequence of a second sensor data type. Each of the first and second sensor data sequence comprises a set of sensor data frames pertaining to a surrounding environment of a vehicle. The control circuitry is further configured to obtain a set of large-scale machine learning models, each trained on a task different from the AD related task. The set of large-scale machine learning models comprising at least a first large-scale machine learning model. The control circuitry is further configured to process, for each training sample of the plurality of training samples, at least a subset of the sensor data frames of the first sensor data sequence through the first large-scale machine learning model, to generate a set of encoded representations for the processed sensor data frames of the first sensor data sequence. The control circuitry is further configured to obtain a transformation function between encoded representations of the AD machine learning model and encoded representations of the large-scale machine learning models of the set of large-scale machine learning models. The control circuitry is further configured to train the encoder module of the AD machine learning model, using the first training data, to generate an encoded representation of each training sample, given the first and second sensor data sequence of said training sample as input, that matches the set of encoded representations, as transformed by application of the transformation function, generated by the first large-scale machine learning model for said sensor data sequence. The control circuitry is further configured to fine-tune the AD machine learning model to perform the AD related task, using second training data annotated for said AD related task. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect. Moreover, any advantages mentioned in connection with one aspect, when applicable, applies to the other aspects as well.

A possible advantage of some embodiments is that the resulting AD machine learning model can leverage the knowledge embedded in one or more large-scale machine learning models, to achieve an even more powerful and performant model. The resulting model may e.g. achieve improved generalization, and robustness across a large variety of data. Moreover, the knowledge may be obtained from non-AD related large-scale machine learning models.

Moreover, it can make it feasible to employ the knowledge of such large models in an AD context, without increasing the computational resources needed to run the model in production.

A possible advantage of some embodiments is that the knowledge of the large-scale machine learning models can be distilled on an encoder output level, and without requiring any explicitly annotated data. Thus, providing for a more efficient training process.

A possible advantage of some embodiments is that the knowledge from the large-scale machine learning models can be leveraged in a different context than what they are intended for. More specifically, the knowledge can be distilled in the AD machine learning model which can be different from the large-scale machine learning models, e.g. in terms of architecture, input sensors, size, etc.

A possible associated advantage of some embodiments is that the cost for collection of the necessary data can be reduced. More specifically, the main training of the AD machine learning model can be done through distilling knowledge from the large-scale machine learning models, which does not require annotated data. Only a smaller dataset of annotated data is needed for the subsequent fine-tuning of the AD machine learning model. In particular, the annotation cost can be reduced by orders of magnitude.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3A illustrates, by way of example, a schematic illustration of a first training process, in accordance with some embodiments;
Figure 3B illustrates, by way of example, a schematic illustration of a second training process, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for the purpose of describing particular embodiments only and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, first training data could be termed second training data, and, similarly, second training data could be termed first training data, without departing from the scope of the embodiments. The first training data and the second training data are both training data, but they are not the same training data.

As used herein, the wording "one or more of" a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and Band C, A and B, Band C, or A and C.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

### Overview

The disclosed technology relates to techniques for training an automated driving (AD) machine learning model for use in the automated (or semiautomated) driving (AD) context. The disclosed technology is at least partly based upon leveraging the trend in the field of machine learning to move towards larger and larger models, trained on huge sets of data. Recent breakthroughs in public large-scale machine learning models, such as large-scale generative models (e.g., GPT), self-supervised vision transformers (e.g., DINO), and multi-modal models (e.g., CLIP), have demonstrated remarkable capabilities. These models leverage vast amounts of training data and self-supervised learning techniques (or other techniques with reduces the need for explicitly annotated training data) to develop generalized representations that are adaptable to new tasks with additional training. In the context of autonomous driving, such models would present opportunities for enhanced perception, decision-making, and overall performance under complex and dynamic road conditions. Moreover, these large-scale models are typically trained using computational resources and data amounts not available to many. Finding ways of leveraging these kinds of models is therefore desirable.

However, despite these advantages, integrating web-scale models (or similar) into automated driving systems poses several technical challenges, including real-time processing and memory constraints. The disclosed technology instead proposes a new way of effectively harnessing the power of such models, and making them even more powerful, for automated driving applications. In other words, it is proposed to exploit these existing models by transferring their knowledge into an AD machine learning model to be used in the AD context. A difference between the AD context, and the large-scale models as referred to above, is that in the AD context, the models need to consume spatiotemporal data, spanning over several sensor modalities (e.g. image data, LiDAR data, radar data etc.) and over a sequence of time (i.e. over several consecutive time frames). The large-scale models typically consume data of only one sensor modality (e.g. only image data), and of one time instance (i.e. one sensor data frame) at a time. Although there exist some large-scale machine learning models that consume video data (i.e. sequences of image data frames). Therefore, adaptations need to be made for the AD machine learning model to be trained, to be able to leverage the knowledge of the large-scale machine learning models. This is further presented below.

The disclosed technology thus relates to training an AD machine learning model to perform an AD related task. This model can be used in, or in the development of, automated driving systems. The model to be trained is also referred to as just "AD model" below. The AD model is trained to consume sequences of sensor data coming from multiple on-vehicle sensors. The AD model comprises an encoder module that outputs encoded representations which represent the sensor- and temporally fused aspects of the world around a vehicle, and which the encoder module deems relevant for solving its AD related task. The AD model further comprises an output module (or output head), is then in charge of generating the desired output of the AD related task, such as object detection, ego-trajectory prediction, etc. The output module essentially translates the encoded representations of the encoder module into a human-interpretable or task relevant output. The term "AD related task" may be understood as referring to any task associated with automated driving or the development thereof. It may for instance be a task performed in the vehicle for autonomous or semi-autonomous control of a vehicle, or for assisting a driver thereof. In another case, the AD related task may be a task of annotating data that can be used in subsequent development/training of other machine learning models to perform such vehicle control or driver assistance.

More specifically, it is proposed to train the encoder module of the AD model to align with those of one or more large-scale machine learning models. This can be achieved by introducing connector transformations (or transformation function(s)) that map the encoded representations of the AD model to the encoded representation of the large-scale machine learning models. This way, the encoder module can learn the knowledge of the large-scale machine learning models, through a training procedure that does not require annotated training data. The transformation function enables the encoder module to learn from the large-scale machine learning models, despite differences e.g. in their input, internal representations, and/or output. For instance, the large-scale machine learning models may consume sensor data of a respective sensor data type, whereas the encoder module may consume sensor data of more than one sensor data type. As a further example, the large-scale machine learning models and the encoder module may differ in that some models use representations in an image space, whereas others generate representations in a Bird's-eye view (BEV). Once the encoder module is trained, the AD model can be fine-tuned on the AD related task, using a task-specific training data set.

### Definitions

Throughout the present disclosure, reference is made to "models" by which it is herein meant any form of machine learning models, such as deep learning models, neural networks, or the like, which can learn and adapt from input data and subsequently generate output data such as predictions, decisions, or classifications based on new data. In general, the machine learning model, as used herein, may generally be any neural network-based model which operates on sensor data of an autonomous vehicle.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras. The training/input data may for instance comprise both an image depicting a scene of a surrounding environment of the vehicle, and corresponding LIDAR point cloud of the same scene. Moreover, the training/input data may be a sequence of sensor data (e.g. a temporal fusion of sensor data). The sequence of sensor data (or sensor data sequence) comprises sensor data frames of at least two different time instances.

The machine learning model may be implemented in some embodiments using publicly available suitable software development machine learning code elements, for example, such as those which are available in PyTorch, TensorFlow, and Keras, or in any other suitable software development platform, in any manner known to be suitable to someone of ordinary skill in the art.

Wordings such as "AD model", "perception model", "large-scale machine learning model", "foundation model", "production model" can herein be understood as serving as an indication of a type, function, property, or similar, of a (machine learning) model.

The wording "perception model", may herein be understood as referring to a computational system or algorithm designed to perceive or interpret an environment depicted in sensor data, such as images, video frames, LIDAR data, radar data, ultrasonic data, or other types of visual data relevant for driving of the vehicle. In other words, the perception model may be designed to detect, locate, identify and/or recognize instances of specific objects within the sensor data, vehicle lanes, relevant signage, appropriate navigation paths, etc. Thus, the perception model may be configured (or trained) to perform a perception task. The perception model may employ a combination of techniques from computer vision, machine learning, and pattern recognition to analyze the visual sensor data and output e.g. bounding boxes or regions of interest around objects of interest present in the input imagery, or some other representation of the surrounding environment. The perception model may be further configured to classify what type of object is detected. The perception model may encompass different architectures, including but not limited to convolutional neural networks (CNNs), recurrent neural networks (RNNs), transformers, and other existing or future alternatives. The output of the perception model may be used in an AD related task or by an AD related system of the ADS, such as in free-space estimation, trajectory prediction, path planning, emergency brake systems, etc. In some embodiments, the perception model may be part of an end-to-end model configured to perform both perception and the AD related task. For example, said model may perform trajectory prediction or path planning based on the sensor data directly.

The wording "production model", may herein be understood as a machine learning model intended to be deployed in the vehicle, i.e. to be used in production. The production model may also be referred to as an "online" model. The production model (or online model) can thus be construed as a model deployed at the edge, i.e. directly on an edge device, in this case an ADS equipped vehicle. In other words, the computations of the production model are performed close locally, close to the data source. In contrast, an offline model refers to a model deployed e.g. at a remote server (such as a cloud server, central server, back-office server, fleet server, or back-end server).

The production model (or online model) can operate in real-time, by processing incoming data from the vehicle's sensors as it is received. This model can be responsible for making immediate driving decisions based on the current environment and situational context. A key characteristic of production models is that they should be able to operate with low latency, i.e. with minimal delay, to ensure timely responses to dynamic driving conditions. Moreover, as the production models are deployed in the vehicle, they typically need to be executable on limited computational resources and with limited memory. For this reason, such models are typically relatively small or simple, e.g. in terms of the number of parameters, architecture complexity, number of layers, etc. The production model may be (or comprise) a perception model, which is deployed in the vehicle. In other words, when the perception model is hosted or launched in the vehicle, it may be referred to as a production (perception) model. In another example, the production model may be an end-to-end perception and planning model.

The wording "foundation model", may herein be understood as referring to a machine learning model that can serve as a learning base based on which more specialized or customized machine learning models (e.g. a production model) can be built. In other words, the foundation model may serve as a data engine or teacher of some sort, which enables training of the specialized or customized machine learning models. The foundation model is typically pre-trained (often by self-supervised or semi-supervised learning) on a vast and diverse dataset at scale to learn general patterns, features, or representations of data. These learned representations can be leveraged and fine-tuned for a wide range of specific tasks, such as natural language processing, image recognition, recommendation systems, and various other applications. The large-scale machine learning models referred to herein, may serve as foundation models for training the encoder module of the AD machine learning model.

In the present disclosure, reference is made to large-scale machine learning models. Large-scale machine learning models are typically characterized by their large model size, including a vast number of trainable parameters. The large-scale machine learning models may be web-scale models. The model size and complexity contribute to its ability to capture intricate patterns and representations from extensive datasets. As a non-limiting example, the large-scale machine learning model may build upon a convolutional neural network (CNN), such as a Residual Neural Network (commonly known in the art as ResNet), and/or on one or more transformer models (or other attention-based models). In general, arbitrary large models (e.g. CNNs) can be used to encode the input data. One or more transformer models of arbitrary size may then be used to interpret the encoded input data. It may also be that a transformer model is be used to encode the input data, and then a CNN is used to densify the encoded representation. The size of the models can, in reality, be limited by the available GPU memory, or other hardware constraints. Training such a large-scale machine learning model can be done end-to-end. In other words, the entire model can be trained simultaneously as a whole.

The large-scale machine learning models may in some embodiments be referred to as general/generic or general-purpose models. This may herein be understood as machine learning models which are not trained for a single, specific task but instead have the flexibility to be used across a wide range of applications and domains. In other words, they may be trained for a general, or even unspecified task (such as general image processing). In particular, they need not to be trained for a task specific to the AD context, such as road segmentation, obstacle avoidance, etc. Moreover, the large-scale machine learning models may be publicly available or open-source models. Additionally, said models may be trained by a third party. Thus, the large-scale machine learning models may be fixed in their input and outputs, and cannot just be modified for the AD context (e.g. doing sensor and temporal fusion). The large-scale machine learning models may further be characterized in that they are able to generalize well across different data domains. This may be thanks to the models being trained on the large variety of data that is available on the internet. Thus, the large-scale machine learning models may have a general applicability, or be configured for a general application. This is in contrast to the AD machine learning model which is trained for a specific AD related task.

The large-scale machine learning models can be deployed as so called "offline models" (in contrast to the online model as described above). The wording "offline model" may herein be understood as referring to a model that is not intended to be used in production at an edge device. Thus, this model is not designed for real-time decision-making but rather for tasks such as training, testing, simulation, validation or in any other part of the development process. For this reason, the execution speed is not of significant importance. Instead, the offline model can be run independently, during a development process, with a focus on achieving high performance on whatever task the offline model performs. In addition, the offline model can be executed in a back-office environment (e.g. on a server), meaning there are more available computing resources. In fact, offline models typically utilize powerful computing resources, including GPUs and distributed computing systems, to handle the intensive computations required for the execution of the offline model. For these reasons, the offline models are typically relatively large or more complex, as compared to production models for instance. In fact, there may be no clear limit to the size of the offline perception model as it could even be parallelized across several computational devices. In the present disclosure, the large-scale machine learning models can be seen as offline models.

The AD model referred to herein (i.e. the AD machine learning model to be trained for the AD related task, and used in or in development of automated driving systems (ADS)), refers to any model that can be used to perform some task of the ADS, or in the development thereof. The AD model may e.g. be an object detection model, an object classification model, a lane estimation model, a free-space estimation model, a trajectory prediction model, an obstacle avoidance model, a path planning model, a scene classification model, a traffic sign classification model, a 3D scene flow model, or an occupancy prediction model. The resulting AD model may thus be a production model, or even a perception model. However, in some embodiments, the resulting AD model can be used as a foundation model on its own, and used for some intermediate task in the ADS development, such as annotation of training data for training other AD models. In such case, the AD model may be an offline model.

The surrounding environment of the vehicle can be understood as a general area around an ego-vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle. The sensor data may thus depict the world around the vehicle. Put differently, the surrounding environment can refer to the world around the vehicle that is relevant for its decision and control.

### Embodiments

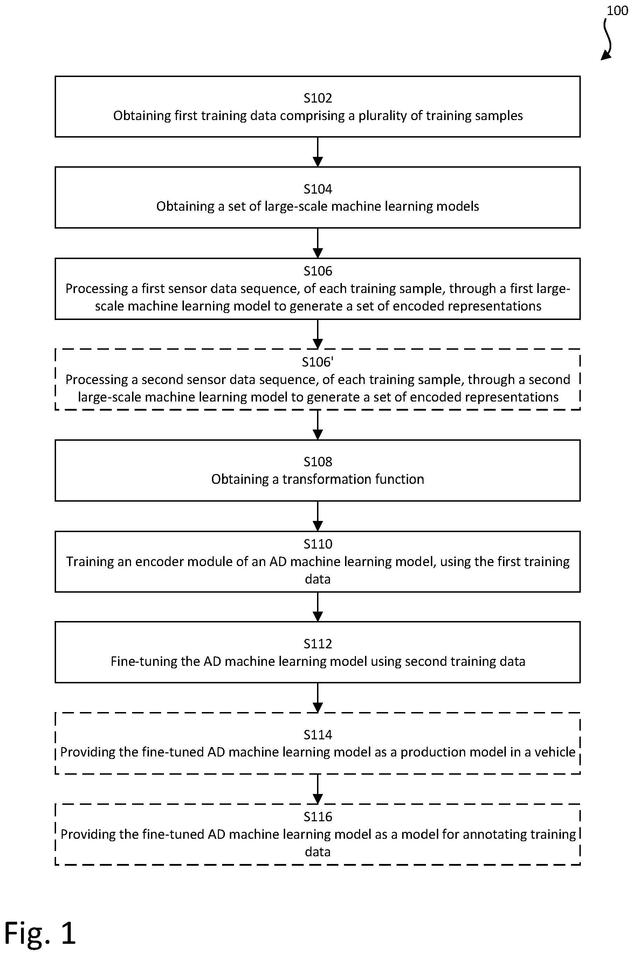

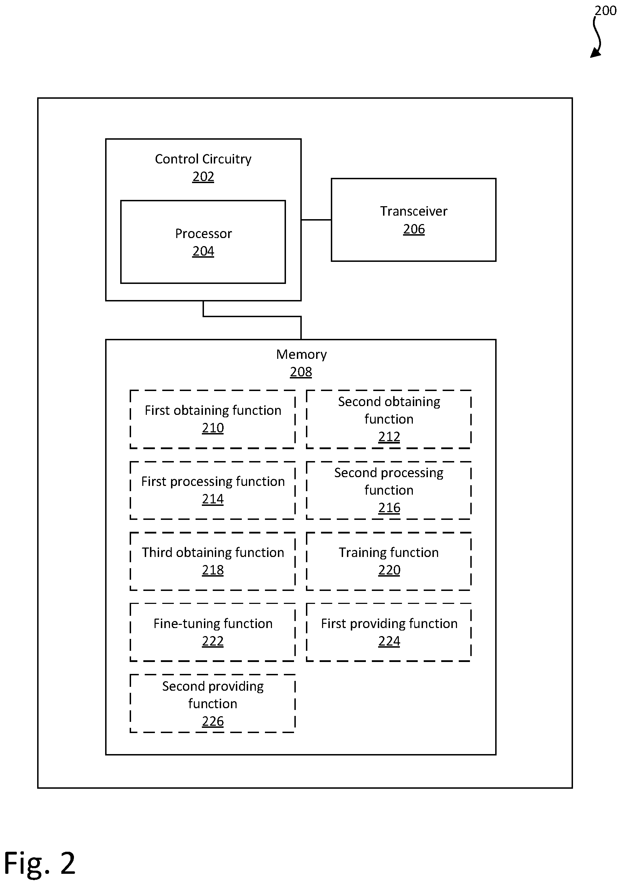

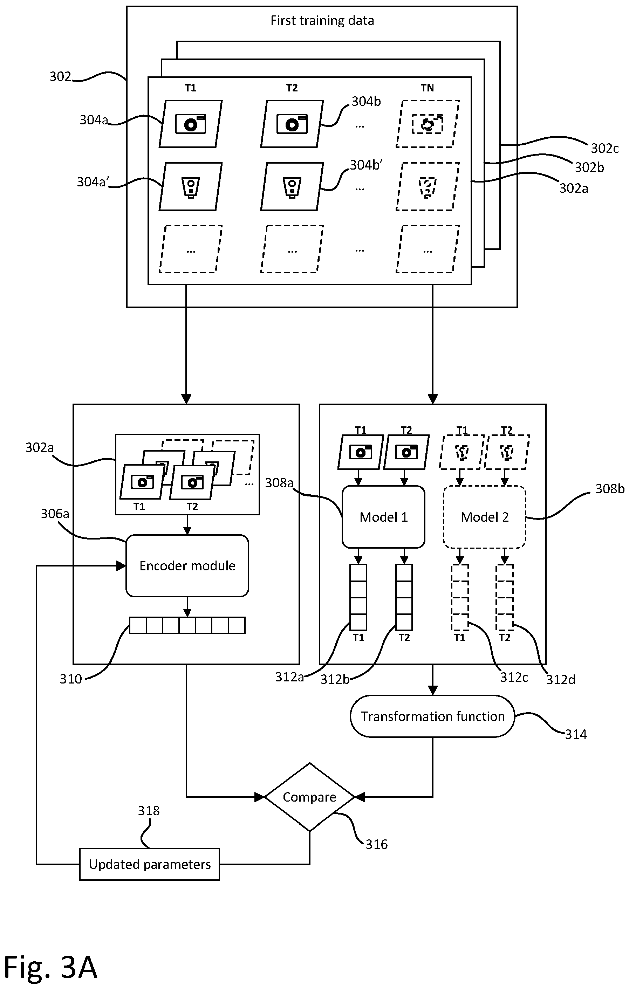

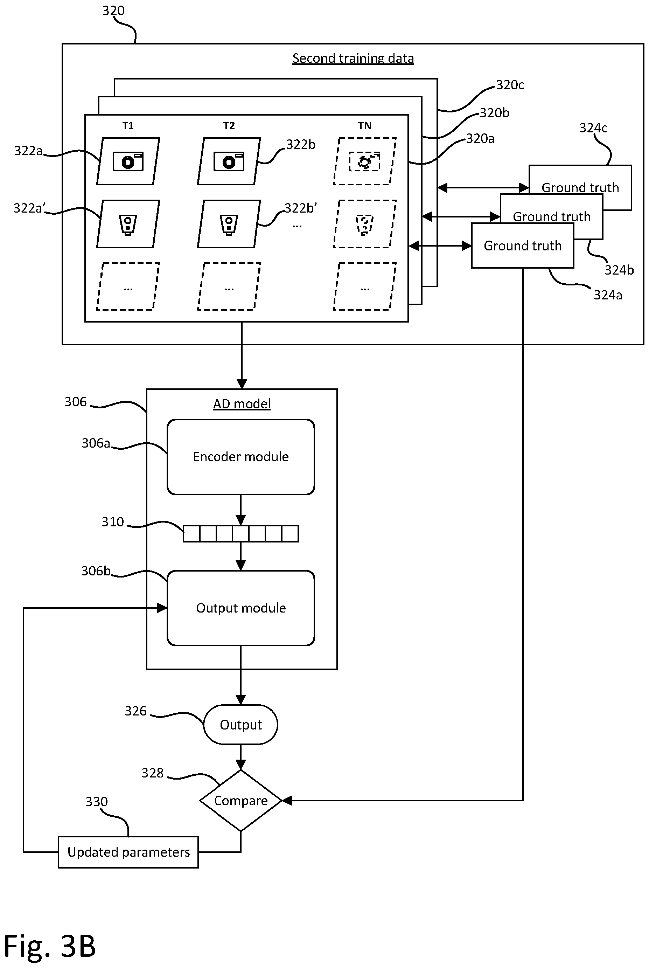

Figure 1 is a schematic flowchart representation of a computer-implemented method 100. The method 100 may be a method for training an AD machine learning model to perform an AD related task. The AD model may be used in or in development of automated driving systems (ADS). The AD machine learning model (as is further explained below in connection with Fig. 3A and 3B, comprises an encoder module configured to generate an encoded representation of an input to the AD machine learning model. The AD machine learning model further comprises an output module configured to generate a model output based on the encoded representation. The model output may then be an output in accordance with the AD related task. The method 100 may be performed by a device 200 as described below in connection with Fig. 2. More generally, the method 100 may be performed by any suitable computing device, such as a server.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102 and S104 may be performed independently of each other, and thus in any order. Similarly, the step denoted S108 can be performed independently of the other steps, in any way suitable. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 100 comprises obtaining S102 first training data comprising a plurality of training samples. The plurality of training samples may be unannotated training samples. The first training data may e.g. be obtained S102 from a data storage (e.g. volatile or non-volatile memory), in connection with the computing device performing the method 100, or retrieved from some cloud-based storage or service.

Each training sample comprises a first sensor data sequence of a first sensor data type and a second sensor data sequence of a second sensor data type. It is to be appreciated that the training samples can be expanded to comprise even further sensor data sequences, e.g. a third sensor data sequence, a fourth sensor data sequence, etc. A sensor data sequence (e.g. the first sensor data sequence and the second sensor data sequence), as used herein, comprises a set of sensor data frames pertaining to a surrounding environment of a vehicle. The set of sensor data frames can be seen as a number of sensor data frames captured over a number of consecutive time instances (i.e. a sequence of time instances). In other words, each sensor data frame may be associated with a respective point in time. Thus, the set of sensor data frames can be seen as depicting the surrounding environment over a plurality of time instances. Each training sample may thus correspond to a certain scene or scenario in the surrounding environment. Each training sample may further comprise meta data associated with the surrounding environment depicted in the sensor data sequences. The meta data may e.g. be time of day, weather information, temperature information, light conditions, etc.

The first sensor data type, the second sensor data type, and any additional sensor data types may be a respective one of image data, LiDAR data, radar data, and ultrasonic data. For example, the first sensor data sequence may be captured by an onboard camera of the vehicle, the second sensor data sequence may be captured by an onboard LiDAR sensor of the vehicle, etc. It is to be noted that the first and second sensor data sequence need not to comprise sensor data frames of the same time instances. For example, the sensors having captured the sensor data frames of the respective sensor data sequence, may have different frame rates. Moreover, first and second sensor data sequence can span over the same period of time. However, the first and second sensor data sequence may as well span over different periods of time. The periods of time of the first and second sensor data sequence may however be at least partly overlapping.

The method further comprises obtaining S104 a set of large-scale machine learning models, each trained on a task different from the AD related task. The set of large-scale machine learning models comprises at least a first large-scale machine learning model. The set of large-scale machine learning models may e.g. be stored and deployed within the computing device or accessed through a cloud-based solution.

The AD related task of the AD model, as referred to above, may be understood as any downstream task relevant for use in, or in the development of, the ADS. In contrast, the tasks on which the large-scale machine learning models are trained on, may differ from the AD task. More specifically, the large-scale machine learning models may be trained on some more general task, in a non-AD context. The AD model (and the associated AD related task) may further differ from the set of large-scale machine learning models in that it performs both sensor and temporal fusion, whereas the set of large-scale machine learning models consumes data of only one sensor modality (i.e. sensor data of a single sensor data type), and/or data in the form of individual sensor data frames.

The large-scale machine learning models of the set of large-scale machine learning models may be publicly available (or open-source) models. More specifically, the large-scale machine learning models may be web-scale or internet-scale models, trained on data mined or scraped from the internet. By large-scale machine learning models, it is meant models having a size similar to the so-called CLIP model, DINO model, SAM model, or similar. Furthermore, the large-scale machine learning models referred to herein are typically distinguishable in that they are trained on vast amounts varied data. The data may be scraped from internet sources. Moreover, the large-scale machine learning models are typically good in generalizing across data domains. Additionally, the set of large-scale machine learning models are already trained models. The large-scale machine learning models of the set of large-scale machine learning models may be larger models relative to the AD machine learning model. Larger in this context may e.g. refer to a number of trainable parameters, model architecture, number of flops required to execute the model, etc. Large may also refer to a task of training the models, i.e. a large cost of training the model.

The method 100 further comprises processing S106, for each training sample of the plurality of training samples, at least a subset of the sensor data frames of the first sensor data sequence through the first large-scale machine learning model, to generate a set of encoded representations for the processed sensor data frames of the first sensor data sequence. The generated set of encoded representations may be referred to as a first set of encoded representations.

Put differently, one or more of the sensor data frames of the first sensor data sequence can be processed S106 through the first large-scale machine learning model. The first large-scale machine learning model is thus a large-scale machine learning model configured to process sensor data of the first sensor data type. Depending on the large-scale machine learning model used, the set of encoded representations may comprise one encoded representation for each sensor data frame having been processed by the large-scale machine learning model. This may e.g. be the case when the first large-scale machine learning model is configured to process one data frame at a time. Put differently, the first large-scale machine learning model (and any additional large-scale machine learning model of the set of large-scale machine learning models) may be configured to process S106 the sensor data frames of the at least subset of sensor data frames individually (or separately), to generate a respective encoded representation for each sensor data frame.

In another case, the large-scale machine learning model may be configured to process two or more sensor data frames simultaneously, e.g. if the large-scale machine learning model is configured to process a sequence of sensor data. In such case, the set of encoded representations may comprise one encoded representation, generated for the two or more sensor data frames having been processed. Put differently, the first large-scale machine learning model (and any additional large-scale machine learning model of the set of large-scale machine learning models) may be configured to process S106 the at least subset of sensor data frames together, to generate a fused encoded representation. This fused encoded representation is thus a temporal fusion.

Moreover, for the purpose of leveraging the advantages of the disclosed technology, it may be sufficient that the first large-scale machine learning model, in this case, only processes a subset of the sensor data frames. The knowledge obtained from processing just a few of the sensor data frames may be sufficient, while you get the additional advantage of saving compute by not having to process all sensor data frames through the first large-scale machine learning model.

It should be noted that the large-scale machine learning models used herein may be used without any classification layers or output heads of the large-scale machine learning models. In other words, only a part of the large-scale machine learning models may be used to generate the encoded representations. The part of the large-scale machine learning models that are used may thus correspond to a part tasked with generating their encoded representations. In some embodiments, the set of encoded representations generated by the large-scale machine learning models may be extracted from an intermediate layer of the large-scale machine learning model. Thus, the encoded representations may be internal or intermediate representations used within the large-scale machine learning models.

It is to be appreciated that even if reference is made to the first large-scale machine learning model above, the principles are applicable also to any other large-scale machine learning model of the set of large-scale machine learning models.

The wording "encoded representation" as used herein, may be understood as an alternative representation of the input data. The encoded representation may e.g. be a numerical representation of the input data. More specifically, the encoded representation may be one or more multidimensional vector(s) representing the input data in a feature space. In another example, the encoded representation may be a BEV representation of the input data. In another example, the encoded representation may be a textual description of the input data. The encoded representation may also be referred to as a feature representation, a feature map, or the like. The encoded representation is a learned representation which shall capture specific properties or characteristics of the input data which are relevant for an AD related downstream task. The encoded representation may thus be any form of computer-interpretable representation.

The generated set of encoded representations may be stored as part of the first training data. More specifically, the set of encoded representations generated for a certain training sample may serve as a ground truth for said training sample, in a subsequent training process (as further described below). The set of encoded representations may thus be used as auto-annotations for the training samples of the first training data. In some embodiments, the step denoted S106 (as well as the step denoted S106' below) and the step of training the encoder module (denoted S110 below), may be performed concurrently, or simultaneously. Such as the set of encoded representations from the set of large-scale machine learning models are generated on the fly, as they are needed, as will be further explained below in connection with Fig. 3A.

The method 100 further comprises obtaining S108 a transformation function between encoded representations of the AD machine learning model and encoded representations of the large-scale machine learning models of the set of large-scale machine learning models. The transformation function may be understood as an algorithm or module configured to align the feature space of the AD model (or more specifically of the encoder module) with the feature space of each of the set of large-scale machine learning models. In a specific example, the transformation function can map an encoded representation as generated by the encoder module to the feature space of the first large-scale machine learning model (i.e. to the same format as an encoded representation generated by the first large-scale machine learning model), or vice versa. The transformation function may do the same between the encoder module and each of the remaining large-scale machine learning models of the set of large-scale machine learning models. In other words, the transformation function may serve as a translation between the different encoded representations. The transformation function may comprise a plurality of sub-functions, one for each large-scale machine learning model of the set of large-scale machine learning models. In other words, a respective sub-function may be provided for each large-scale machine learning model, to provide a mapping between the encoder module and said large-scale machine learning model. Thus, a separate transformation (sub-)function may be used for each large-scale machine learning model.

The transformation function may be a learnable transformation function. Or more specifically, at least a part of the transformation function may comprise learnable parameters. The transformation function may then be trained in connection with the encoder module (i.e. as part of the step denoted S110 below). Alternatively, the transformation function may be a predefined transformation function. Or more specifically, the transformation function may be a non-learned transformation function.

The transformation function may e.g. be constructed from a linear transformation, or a pooling layer followed by a linear transformation. It is however to be noted that the exact structure of the transformation function (or more specifically of the sub-functions associated with a respective large-scale machine learning model), depends on what kind of encoded representations the encoder module and the set of large-scale machine learning models generate. For example, in a more complex case, the AD model may be configured to produce dense 3D features, while a large-scale machine learning model produces dense 2D features. The connector transform could then utilize a camera projection matrix to map the 3D AD model features into the image plane, before matching with the large-scale machine learning model. In the even more complex case, one could utilize neural rendering to more accurately render the AD model features into the image plane. As another example, web-scale models typically output relatively low-resolution encoded representations. The encoder module may output high-resolution encoded representations that are then down-sampled to compare against the large-scale machine learning model, while similarly forcing consistency across transformations in the high-resolution encoded representations.

The method 100 further comprises training S110 the encoder module of the AD machine learning model, using the first training data, to generate an encoded representation of each training sample, given the first and second sensor data sequence of said training sample as input, that matches the set of encoded representations, as transformed by application of the transformation function, generated by the first large-scale machine learning model for said sensor data sequence. Put differently, the encoder module is trained, using the first training data and the sets of encoded representations generated through processing the training samples through the set of large-scale machine learning models, based on minimizing a difference (or error) between the encoded representations generated by the AD model and those generated by the set of large-scale machine learning models. Thus, the set of encoded representations from the first large-scale machine learning model in this case, are effectively used as a ground truth for the corresponding training samples, for the purposes of training the encoder module. By having the encoder module learn to replicate the encoded representations of the set of large-scale machine learning models, it effectively obtains the knowledge embedded in the large-scale machine learning models.

It should be further noted that the AD machine learning model may consume all available data of each training sample, i.e. both the first sensor data sequence and the second sensor data sequence, regardless of which data the first large-scale machine learning model (and optionally any additional large-scale machine learning model) processes. More generally, the AD machine learning model may consume at least two sensor data frames of the first sensor data sequence, and at least two sensor data frames of the second sensor data sequence. The AD machine learning model can then generate an encoded representation which is representative of both the first and second sensor data sequence. More specifically, the encoded representation generated by the encoder module may be a fused representation of the first sensor data sequence and the second sensor data sequence. Thus, it can be seen as a sensor and temporal fusion.

In some embodiments, the encoder module can be trained to generate an encoded representation that matches the set of encoded representations for the same time instance(s). Put differently, the encoder module may be trained to predict the set of encoded representations of the at least one large-scale machine learning model for a given time instance, given the sensor data frames of at least said time instance. Thus, the encoder module may be given at least the sensor data which the large-scale machine learning model(s) were given to generate the set of encoded representations.

In some embodiments, the encoder module can be trained to generate an encoded representation that matches the set of encoded representations for future or past time instances. In other words, the encoder module may be trained to predict the set of encoded representations of the at least one large-scale machine learning model for a given time instance, given the sensor data frames of previous and/or past time instances. Thus, the encoder module may be given sensor data frames of past and/or future time instances than the sensor data frames that the large-scale machine learning model(s) were given to generate the set of encoded representations. As an example, the encoder module may be given sensor data frames from times [t-T, ..., t], and is trained to predict the set of encoded representations generated by the large-scale machine learning model(s) for times [t, ..., t+T]. This may enable the encoder module to obtain even deeper knowledge about the dynamic evolution of the world.

Training S110 the encoder module may thus involve processing the training samples of the first training data through the encoder module to generate a corresponding encoded representation. During this process, the set of encoded representations generated by the set of large-scale machine learning models can be used as ground truth. Model parameters of the encoder module may then be updated in view of a loss function, defined based on an error between the encoded representations.

The transformation function is applied in this process to enable the comparison between the encoded representations of the encoder module, and the encoded representations of the large-scale machine learning models. The transformation function may perform additional operations on the sets of encoded representations from the large-scale machine learning models, such as fusing each set of encoded representations into a fused representation. The fusion can either be performed over different time frames, and/or across the different sensor modalities. The fused representation can then be compared with the encoded representation of the encoder module. How the encoded representation can be fused and compared, will be further explained below, in connection with Fig. 3A.

As stated above, the set of large-scale machine learning models comprises at least the first large-scale machine learning model. Thus, in some embodiments, the set of large-scale machine learning models only comprises one large-scale machine learning model. In such case, only one sensor data sequence (of one sensor data type) of each training sample may be processed. It is to be noted that a sensor data sequence may comprise sensor data frames from one or more instances of the same sensor type. A sensor data sequence may e.g. comprise image frames from one or more cameras. Still, the AD machine learning model may be trained to consume two or more sensor data sequences of two or more sensor data types. In other words, the encoder module can be trained (as will be further described below) to encode sensor data of two or more sensor data types, such as image data and LiDAR data, while it is supervised against encoded representation generated by the first large-scale machine learning model of just one sensor data sequence, such as the image data.

In some embodiments, the set of large-scale machine learning models may further comprise a second large-scale machine learning model. Or more generally, the set of large-scale machine learning models may comprise two or more large-scale machine learning models. The method 100 may then further comprise processing S106', for each training sample of the plurality of training samples, at least a subset of the sensor data frames of the second sensor data sequence through the second large-scale machine learning model, to generate a set of encoded representations for the processed sensor data frames of the second sensor data sequence. Thus, the second large-scale machine learning model may be a large-scale machine learning model configured to process sensor data of the second sensor data type. In other words, the first large-scale machine learning model may be used to process the first sensor data sequence (of the first sensor data type), while the second large-scale machine learning model may be used to process the second sensor data sequence (of the second sensor data type). The encoder module may then be further trained S110 to generate encoded representations that matches the set of encoded representations, as transformed by application of the transformation function, generated by the second large-scale machine learning model. In other words, for each training sample, the encoder module may be trained to match both the set of encoded representations generated by the first large-scale machine learning model and the set of encoded representations generated by the second large-scale machine learning model. Say for instance that the first large-scale machine learning model is configured to encode image data, and the second large-scale machine learning model is configured to encode LiDAR data. Then the encoder module is able to learn from encodings generated for both image data and LiDAR data, thereby forming its own encoded representations which are even more capable than those of the large-scale machine learning models (e.g. in the sense that it can perform both sensor fusion and temporal fusion).

Any principles or features described in connection with how the first large-scale machine learning model is used in the method 100, are applicable correspondingly to the second large-scale machine learning model, and any additional large-scale machine learning models of the set of large-scale machine learning models. The use of one or more large-scale machine learning models are further explained below, through the illustrative example of Fig. 3A and 3B.

The method 100 may further comprise fine-tuning S112 the AD machine learning model to perform the AD related task, using second training data annotated for said AD related task. In other words, the complete model comprising the encoder module and the output module may be trained to perform the AD related task. The second training data may comprise a plurality of training samples, each training sample comprising a first sensor data sequence of a first sensor data type and a second sensor data sequence of a second sensor data type. Each of the first and second sensor data sequence comprising a set of sensor data frames pertaining to a surrounding environment of a vehicle.

The second training data may also be referred to as a task-specific training dataset. Each training sample of the second training data is annotated for said AD related task. In other words, each training sample may comprise some form of annotation data. The annotation data may be manually (i.e. human-labeled) or automatically generated. The annotation data may e.g. comprise an associated ground truth. In one example, the annotation data may comprise location of bounding boxes, in case the AD related task is an object detection task. In another example, the annotation data may be object classes or labels, in case the AD related task is an object classification task. In yet another example, the annotation data may comprise road segmentation data, in case the AD related task is a road segmentation task. In yet another example, the annotation data may comprise driven trajectory (e.g. in the form of a sequence of recorded locations) of the vehicle, in case the AD related task related to path or trajectory planning. As is readily understood, the annotation data may be adapted for any relevant AD related task. In some embodiments, fine-tuning S112 the AD machine learning model is performed using supervised learning. In some embodiments, the fine-tuning S112 of the AD machine learning model is performed using self-supervised learning, or unsupervised learning.

The wording "fine-tuning" is herein used to indicate a training/learning process of a model which has already been trained to some extent, in this case as a result of the step of training S110 the encoder module. Additionally, in some embodiments, the step of fine-tuning S112 may involve updating learnable parameters (e.g. model weights) of only a part of a model. In this case, fine-tuning S112 the AD machine learning model may involve learning only the learnable parameters of the output module. By a different notation, the step denoted S110 may as well be referred to as a step of pre-training the encoder module, while the step denoted S112 is referred to as a step of training the AD machine learning model.

The method 100 may further comprise providing S114 the fine-tuned AD machine learning model as a production model in a vehicle equipped with an automated driving system, for performing the AD related task. In other words, the AD machine learning model may be used for performing the AD related task in the vehicle. The AD machine learning model may thus be used in controlling the operation of said vehicle, and/or assisting the driver in controlling the operation of said vehicle. This may e.g. depend on what feature (i.e. AD or ADAS feature) the AD machine learning model is used as part of. More specifically, the method 100 may further comprise performing the AD related task by processing sensor data sequences, as captured by two or more onboard sensors of the vehicle, as input to the fine-tuned AD machine learning model, and controlling one or more functions of the vehicle based on an output of the fine-tuned AD machine learning model.

The method 100 may further comprise providing S116 the fine-tuned AD machine learning model as a model for annotating training data for subsequent training of a production model to perform the AD related task. The production model may then be used as part of an automated driving system. The fine-tuned second AD machine learning model can thus be used as its own large-scale machine learning model, to generate auto-annotations that can be used for training the production model to perform the AD related task, or any other task relevant in the AD context.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Figure 2 is a schematic illustration of a computing device 200, in accordance with some embodiments of the disclosed technology. The computing device 200 may be configured to perform the method 100 as described in connection with Fig. 1. Thus, the computing device 200 is a computing device 200 for training an AD machine learning model to perform an AD related task. As explained in the foregoing, the AD machine learning model comprises an encoder module configured to generate an encoded representation of an input to the AD machine learning model, and an output module configured to generate a model output based on the encoded representation.

The computing device 200 as described herein for the purpose of this patent application, refers to a computer system, or any device configured to provide various computing services, data storage, processing capabilities, etc. Thus, the computing device 200 as described herein may refer to a general computing device. The computing device 200 may be a server such as a remote server, cloud server, central server, back-office server, fleet server, or back-end server. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as vehicles or other devices. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain first training data comprising a plurality of training samples. This may be performed e.g. by execution of a first obtaining function 210. Each training sample comprises a first sensor data sequence of a first sensor data type and a second sensor data sequence of a second sensor data type. Each of the first and second sensor data sequence comprises a set of sensor data frames pertaining to a surrounding environment of a vehicle
The control circuitry 202 is further configured to obtain a set of large-scale machine learning models, each trained on a task different from the AD related task. This may be performed e.g. by execution of a second obtaining function 212. The set of large-scale machine learning models comprises at least a first large-scale machine learning model.

The control circuitry 202 is further configured to process, for each training sample of the plurality of training samples, at least a subset of the sensor data frames of the first sensor data sequence through the first large-scale machine learning model, to generate a set of encoded representations for the processed sensor data frames of the first sensor data sequence. This may be performed e.g. by execution of a first processing function 214.

The control circuitry 202 is further configured to obtain a transformation function between encoded representations of the AD machine learning model and encoded representations of the large-scale machine learning models of the set of large-scale machine learning models. This may be performed e.g. by execution of a third obtaining function 218.

The control circuitry 202 is further configured to train the encoder module of the AD machine learning model, on the first training data, to generate an encoded representation of each training sample, given the first and second sensor data sequence of said training sample as input, that matches the set of encoded representations, as transformed by application of the transformation function, generated by the first large-scale machine learning model for said sensor data sequence. This may be performed e.g. by execution of a training function 220.

The control circuitry 202 is further configured to fine-tune the AD machine learning model to perform the AD related task, using the second training data annotated for said AD related task. This may be performed e.g. by execution of a fine-tuning function 222.

The control circuitry 202 may be further configured to process, for each training sample of the plurality of training samples, at least a subset of the sensor data frames of the second sensor data sequence through a second large-scale machine learning model, to generate a set of encoded representations for the processed sensor data frames of the second sensor data sequence. This may be performed e.g. by execution of a second processing function 216. The encoder module may then further be trained to generate encoded representations that matches the set of encoded representations, as transformed by application of the transformation function, generated by the second large-scale machine learning model.

The control circuitry 202 may be further configured to provide the fine-tuned AD machine learning model as a production model in a vehicle equipped with an automated driving system, for performing the AD related task. This may be performed e.g. by execution of a first providing function 224.

The control circuitry 202 may be further configured to provide the fine-tuned AD machine learning model as a model for annotating training data for subsequent training of a production model to perform the AD related task. This may be performed e.g. by execution of a second providing function 226.

It should be noted that the first, second and third obtaining function 221, 212, 218 may be implemented as one or more common obtaining functions. Similarly, the first and second processing function 214, 216 may be implemented as a common processing function. Similarly, the first and second providing function 224, 226 may be implemented as a common providing function.

It should further be noted that the principles, features, aspects, and advantages of the method 100 as described above in connection with Fig. 1, are applicable also to the computing device 200 as described herein. In order to avoid undue repetition, reference is made to the above.

Figure 3A illustrates, by way of example, a schematic illustration of a first training process, in accordance with some embodiments. More specifically, Fig. 3A illustrates the process of training the encoder module 306a of the AD machine learning model 306, i.e. corresponding to the steps denoted S102 to S110 of the method 100 as described above in connection with Fig. 1. Figure 3B then illustrates, by way of example, a schematic illustration of a second training process, in accordance with some embodiments. Namely, the process of fine-tuning S112 the AD machine learning model 306 using second training data, as described above. Thus, Fig. 3A and 3B serve as another way of describing the method 100 of Fig. 1. Any features or principles described in the following are applicable also to the method 100 as described above, and vice versa.

Looking first at Fig. 3A, the first training data 302 is shown as comprising a plurality of training samples 302a, 302b, 302c. Each training sample comprises at least a first sensor data sequence of a first sensor data type and a second sensor data sequence of a second sensor data type. Each sensor data sequence comprises a set of sensor data frames. In turn, the set of sensor data frames comprises at least two sensor data frames captured for a respective point in time. However, the set of sensor data frames may comprise up to N sensor data frames, where N is a positive integer larger than 2.

In the illustrated example, the first sensor data sequence is a sequence of image data frames. In other words, the first sensor data sequence may be a series of image frames, captured by a camera of a vehicle. More specifically, the first sensor data sequence comprises a first image data frame 304a associated with a first point in time T1, and a second image data frame 304b associated with a second point in time T2. However, as mentioned above, the first sensor data sequence may comprise up to N image data frames.

The second sensor data sequence is herein illustrated as a sequence of LiDAR data frames. In other words, the second sensor data sequence may be a series of LiDAR frames, captured by a LiDAR sensor of the vehicle. More specifically, the second sensor data sequence comprises a first LiDAR data frame 304a' associated with the first point in time T1, and a second LiDAR data frame 304b' associated with the second point in time T2. However, as mentioned above, the second sensor data sequence may comprise up to N LiDAR data frames.

For simplicity, the first and second sensor data sequence are illustrated as having the same number of image data frames and LiDAR data frames, and for the same points in time. It is however to be noted that the first and second sensor data sequences (and any further sensor data sequences present as part of a training sample) may comprise different numbers of sensor data frames, as well as for different points in time. This will differ e.g. depending on a frame rate of the corresponding sensors having captured the sensor data frames.

Moving on, Fig. 3A further shows how the first training sample 302a is processed as part of training the encoder module 306a of the AD model 306. This procedure may be repeated for each training sample of the first training data 302. Training the encoder module 306 may e.g. be performed until all training samples of the first training data 302 have been processed, and/or until a convergence criteria have been met.

The box to the left in Fig. 3A shows how the first training sample 302a is processed through the encoder module 306a (i.e. corresponding to part of the step denoted S110 in Fig. 1), while the box to the right shows how the first training sample 302a is processed through the set of large-scale machine learning models (i.e. corresponding to the steps denoted S106 and S106' in Fig. 1).

Looking first at the process of processing the first training sample 302a through the set of large-scale machine learning models. As explained in the foregoing, the set of large-scale machine learning models comprises at least a first large-scale machine learning model 308a. Optionally, it may further comprise a second large-scale machine learning model 308b (as illustrated in broken lines). Optionally, it may comprise even further large-scale machine learning models.

In the illustrated example, the first large-scale machine learning model 308a is configured to process image data, and thus the image data frames 304a, 304b of the first sensor data sequence. Optionally, the second large-scale machine learning model 308b may be configured to process LiDAR data, and thus the LiDAR data frames 304a', 304b' of the second sensor data sequence.

The first large-scale machine learning model 308 processes each image data frame individually, to generate a respective first and second encoded representation 312a, 312b. Thus, the first encoded representation 312a is generated for the first image data frame 304a, while the second encoded representation 312b is generated for the second image data frame 304b. The first and second encoded representation 312a, 312b thus constitutes the set of encoded representations generated by the first large-scale machine learning model 308a for the first training sample 302a. Similarly, the second large-scale machine learning model may process each LiDAR data frame individually, to generate a respective third and fourth encoded representation 312c, 312d. The third encoded representation 312c and the fourth encoded representation 312d may also form part of the set of encoded representations generated for the first training sample 302a. In some embodiments, a large-scale machine learning model may be configured to process a sequence of sensor data directly, e.g. process both the first and second sensor data frame simultaneously, to generate a single encoded representation. As noted before, only a subset of the sensor data frames of a sensor data sequence may need to be processed. As an example, the first large-scale machine learning model 308a may be configured to process only the first image data frame 304a, and thus generate only the first encoded representation 312a.

The set of encoded representations for the first training sample 302 may be generated in connection with the encoder module 306a processing a new training sample. In other words, it may be generated on the fly, as a new training sample is to be processed. Thus, the process in the left box and the process in the right box may be performed in parallel, or at least partially in parallel. However, the set of encoded representations generated by the set of large-scale machine learning models may as well be performed beforehand and stored together with the training samples of the first training data. The stored sets of encoded representations may then be accessed from storage when needed.

Looking now at the process in the box to the left, i.e. the process of processing the first training sample 302a through the encoder module 306a. The encoder module 306a is configured to process the entire training sample as input, i.e. both the first sensor data sequence, and the second sensor data sequence. The encoder module 306a then generates an encoded representation 310 based on the input.

The transformation function 314 then serves as a connector or mapping function between the encoded representation 310 generated by the encoder module 306a, and the set of encoded representations 312a-d generated by the first large-scale machine learning model 308a and (optionally) the second large-scale machine learning model 308b. In the illustrated example, the transformation function 314 is applied to the set of encoded representations 312a-d as output from the first and second large-scale machine learning model 308a, 308b. Depending on a specific realization, the transformation function 314 may as well be applied to the encoded representation 310 from the encoder module 306a, or both.

Once the transformation function 314 has provided a connection, to bridge the difference e.g. in how the encoded representations are formatted, the encoded representation 310 of the encoder module 306a can be compared (herein represented by the comparison block 316) with the set of encoded representations 312a-d from the set of large-scale machine learning models. The transformation function 314 may also do further processing steps, such as extracting a subset of the encoded representation from the encoder module to be compared against the set of encoded representations from the first and second large-scale machine learning model.

Then, based on the comparison, updated parameters 318 for the encoder module 306a may be determined. The encoder module 306a is then updated, in view of these updated parameters 318 before processing the next training sample.

In other words, the encoder module 306a can be trained to replicate (or match) the encoded representations generated by first large-scale machine learning model 308a and (optionally) the second large-scale machine learning model 308b. Put differently, the AD model can be trained to reproduce the large-scale machine learning model(s) output(s) on their respective sensor data sequence, on the full set of data of a training sample. Thus, the updated parameters 318 may be determined in view of a loss function defined as minimizing an error between the encoded representation 310 of the encoder module 306a and the set of encoded representations from the set of large-scale machine learning models.

In some embodiments, the encoded representation 310 of the encoder module 306a may be compared to each of the set of encoded representations 312a-d from the set of large-scale machine learning models separately. Thus, the transformation function may apply a transformation to each of the first to fourth encoded representation 312a-d, to allow the encoded representation 310 of the encoder module 306a to be compared to each one independently. Then the encoder module may be updated in view of minimizing the error against each of the set of encoded representations 312a-d.

In some embodiments, a fused representation may be generated of the set of encoded representations generated by each large-scale machine learning model. For example, the first and second encoded representation 312a, 312b from the first large-scale machine learning model 308a may be fused, e.g. through averaging, to form a temporal fusion of the output from the first large-scale machine learning model 308a. If the first large-scale machine learning model 308a is configured to consume sensor data sequence directly, it is not necessary to perform this fusion step. Similarly, a fused representation may be generated for the third and fourth encoded representation 312c, 312d as generated by the second large-scale machine learning model 308b. The encoded representation 310 of the encoder module 306a may then be compared to each of the fused representations separately. As yet another alternative, the fused representations from the first large-scale machine learning model 308a may be combined with the fused representation from the second large-scale machine learning model 308b such that a single encoded representation is outputted from the set of large-scale machine learning models. This single encoded representation can then be compared to the encoded representation 310 of the encoder module 306a.

As the AD model (or more specifically the encoder module 306a) has access to all sensor data of each training sample, it can learn to combine, in an optimized manner, all sensors and temporal cues to reproduce the deep knowledge of images or other sensor modalities embedded in the large-scale machine learning models. Eventually this can lead to the AD model getting a very capable encoder module that has a deep understanding of the world around it by itself, without having needed any annotated data. Given the open-endedness of large-scale machine learning models this might also make the AD model more capable of finding very rare or strange parts of scenes than it could have been if trained on annotated data instead. Moreover, by combining multiple large-scale machine learning models, the AD model could eventually become more capable of understanding AD scenes than the large-scale machine learning models themselves.

As is readily understood, there are several different ways of what sensor data frames (and of what time instances) are fed to the encoder module 306a and the large-scale machine learning models 308a, 308b. As mentioned above, the encoder module may be trained to predict the encoded representations of the large-scale machine learning model(s) for past, present, or future time instances, by withholding selected parts of the sensor data sequences as fed to the encoder module 306a. In some cases, the large-scale machine learning model(s) may be run across several time instances (i.e. on every sensor data frame of each sensor data sequence), and the encoder module 306a is trained to reproduce the encoded representations generated for each time instance by the large-scale machine learning model(s), using one or more sensor data frames as input.

Moving on to Fig. 3B, which shows the process of fine-tuning the AD model 306 for performing the AD related task. The process of fine-tuning the AD model 306 can be seen as a supervised learning process. Second training data is used, which comprises a plurality of training samples 320a, 320b, 320c. Each training sample comprises the same type of data as the training samples of the first training data. In other words, each training sample, comprises at least a first sensor data sequence, and a second sensor data sequence. In the illustrated example, the first training sample 320a comprises a first sensor data sequence comprising a first and second image data frame 322a, 322b of a respective point in time, and a second sensor data sequence comprising a first and second LiDAR data frame 322a', 322b'. However, the training samples may comprise sensor data sequences of other sensor data types as well, and sensor data frames of more than two points in time.

Each training sample is further associated with a ground truth 324a, 324b, 324c. The ground truths may provide any necessary information for serving as annotation data for the AD related task. In other words, the ground truths may represent a desired model output, given the corresponding training sample as input.

The AD model 306 may then be fine-tuned by feeding each training sample 320a-c to the model 306. More specifically, the encoder module 306 (as trained in accordance with the process in Fig. 3A) receives as input a training data sample, and generates a corresponding encoded representation 310. The encoded representation 310 is then fed as input to the output module 306b, which is configured to generate a model output 326, depending on the AD related task. The model output 326 is then compared 328 with the ground truth corresponding to the training sample, and updated parameters 330 for the output module 306b can be determined based on said comparison.

Once having completed the fine-tuning process (e.g. when all training samples have been processed, or when some convergence criteria have been met) the AD model 306 can be provided as a production model for performing said AD related task, or as its own foundation model, as described above.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for training an automated driving (AD) machine learning model (306) to perform an AD related task, wherein the AD machine learning model (306) comprises an encoder module (306a) configured to generate an encoded representation (310) of an input to the AD machine learning model (306), and an output module (306b) configured to generate a model output (326) based on the encoded representation (310), the method (100) comprising:
obtaining (S102) first training data (302) comprising a plurality of training samples (302a-c), each training sample comprising a first sensor data sequence of a first sensor data type and a second sensor data sequence of a second sensor data type, wherein each of the first and second sensor data sequence comprises a set of sensor data frames (304a-d) pertaining to a surrounding environment of a vehicle;
obtaining (S104) a set of large-scale machine learning models, each trained on a task different from the AD related task, the set of large-scale machine learning models comprising at least a first large-scale machine learning model (308a);
processing (S106), for each training sample of the plurality of training samples, at least a subset of the sensor data frames of the first sensor data sequence through the first large-scale machine learning model, to generate a set of encoded representations for the processed sensor data frames of the first sensor data sequence;
obtaining (S108) a transformation function (314) between encoded representations (310) of the AD machine learning model (306) and encoded representations of the large-scale machine learning models of the set of large-scale machine learning models;
training (S110) the encoder module (306a) of the AD machine learning model (306), using the first training data, to generate an encoded representation (310) of each training sample, given the first and second sensor data sequence of said training sample as input, that matches the set of encoded representations, as transformed by application of the transformation function (314), generated by the first large-scale machine learning model for said sensor data sequence; and
fine-tuning (S112) the AD machine learning model (306) to perform the AD related task, using second training data (320) annotated for said AD related task.

2. The method (100) according to claim 1, wherein the set of large-scale machine learning models further comprises a second large-scale machine learning model,
wherein the method (100) further comprises processing (S106'), for each training sample of the plurality of training samples, at least a subset of the sensor data frames (304a-d) of the second sensor data sequence through the second large-scale machine learning model, to generate a set of encoded representations (312a-d) for the processed sensor data frames of the second sensor data sequence; and
wherein the encoder module (306a) is further trained (S110) to generate encoded representations that matches the set of encoded representations, as transformed by application of the transformation function (314), generated by the second large-scale machine learning model.

3. The method (100) according to claim 1 or 2, wherein the encoded representation generated by the encoder module is a fused representation of the first sensor data sequence and the second sensor data sequence.

4. The method (100) according to any one of the claims 1 to 3, wherein the first large-scale machine learning model and/or the second large-scale machine learning model is configured to process (S106) the sensor data frames of the at least subset of sensor data frames individually, to generate a respective encoded representation for each sensor data frame.

5. The method (100) according to any one of the claims 1 to 4, wherein the first large-scale machine learning model and/or the second large-scale machine learning model is configured to process the at least subset of sensor data frames together, to generate a fused encoded representation.

6. The method (100) according to any one of the claims 1 to 5, wherein the transformation function is a learnable transformation function, and trained in connection with the encoder module.

7. The method (100) according to any one of the claims 1 to 5, wherein the transformation function is a pre-defined transformation function.

8. The method (100) according to any one of the claims 1 to 7, wherein the large-scale machine learning models of the set of large-scale machine learning models are larger models relative to the AD machine learning model.

9. The method (100) according to any one of the claims 1 to 8, wherein the set of large-scale machine learning models is a set of public machine learning models.

10. The method (100) according to any one of the claims 1 to 9, wherein the step of fine-tuning (S112) the AD machine learning model is performed using supervised learning.

11. The method (100) according to any one of the claims 1 to 10, further comprising providing (S114) the fine-tuned AD machine learning model as a production model in a vehicle equipped with an automated driving system, for performing the AD related task.

12. The method (100) according to any one of the claims 1 to 11, further comprising providing (S116) the fine-tuned AD machine learning model as a model for annotating training data for subsequent training of a production model to perform the AD related task.

13. A computer program product comprising instructions, which when the program is executed by a computing device, causes the computing device to carry out the method (100) according to any one of the claims 1 to 12.

14. A computing device (200) for training an automated driving (AD) machine learning model to perform an AD related task, wherein the AD machine learning model (306) comprises an encoder module (306a) configured to generate an encoded representation (310) of an input to the AD machine learning model (306), and an output module (306b) configured to generate a model output (326) based on the encoded representation (310), the computing device (200) comprising control circuitry (202) configured to:
obtain first training data (302) comprising a plurality of training samples (302a-c), each training sample comprising a first sensor data sequence of a first sensor data type and a second sensor data sequence of a second sensor data type, wherein each of the first and second sensor data sequence comprises a set of sensor data frames (304a-d) pertaining to a surrounding environment of a vehicle;
obtain a set of large-scale machine learning models, each trained on a task different from the AD related task, the set of large-scale machine learning models comprising at least a first large-scale machine learning model (308a);
process, for each training sample of the plurality of training samples, at least a subset of the sensor data frames of the first sensor data sequence through the first large-scale machine learning model, to generate a set of encoded representations for the processed sensor data frames of the first sensor data sequence;
obtain a transformation function (314) between encoded representations (310) of the AD machine learning model (306) and encoded representations of the large-scale machine learning models of the set of large-scale machine learning models;
train the encoder module (306a) of the AD machine learning model (306), on the first training data, to generate an encoded representation (310) of each training sample, given the first and second sensor data sequence of said training sample as input, that matches the set of encoded representations, as transformed by application of the transformation function (314), generated by the first large-scale machine learning model for said sensor data sequence; and
fine-tune the AD machine learning model (306) to perform the AD related task, using second training data (320) annotated for said AD related task.
